Europäisches Patentamt

European Patent Office

Office européen des brevets

(11) Veröffentlichungsnummer: **0 203 356**

**A2**

# (12) EUROPÄISCHE PATENTANMELDUNG

(21) Anmeldenummer: 86105518.4

(22) Anmeldetag: 22.04.86

(51) Int. Cl.⁴: **C08G 65/44**

(30) Priorität: 30.04.85 DE 3515516

(43) Veröffentlichungstag der Anmeldung:
**03.12.86 Patentblatt 86/49**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Brandt, Hermann, Dr.**
**Keltenstrasse 30**
**D-6707 Schifferstadt(DE)**
Erfinder: **Fischer, Hermann, Dr.**
**Hardenburgstrasse 33**
**D-6703 Limburgerhof(DE)**
Erfinder: **Dreher, Hermann, Dr.**
**Im Waldwinkel 5**
**D-6104 Seeheim-Jugenheim 1(DE)**
Erfinder: **Heil, Eduard**
**Hardenburgstrasse 4**
**D-6703 Limburgerhof(DE)**
Erfinder: **Hambrecht, Juergen, Dr.**
**Am Klosterwald 31**
**D-4400 Münster-Hiltrup(DE)**
Erfinder: **Gausepohl, Hermann, Dr.**
**Neuweg 10**
**D-6704 Mutterstadt(DE)**
Erfinder: **Siebel, Peter, Dr.**
**Trifelsring 20**
**D-6703 Limburgerhof(DE)**

(54) **Verfahren zur kontinuierlichen Herstellung von Polyphenylenethern.**

(57) Die Erfindung betrifft ein Verfahren zur kontinuierlichen Herstellung von hochmolekularen Polyphenylenethern aus einwertigen Phenolen durch oxidative Kupplungsreaktion in zumindest zwei in Reihe angeordneten Polymerisationszonen, durch Einleiten von Sauerstoff und Ableiten des resultierenden Abgases bei Temperaturen zwischen 10 und 50°C und Drücken zwischen 1 und 10 bar in Anwesenheit eines Katalysatorkomplexes und eines Lösungsmittels, wobei die Sauerstoffkonzentration in der flüssigen Phase eines in der ersten Zone befindlichen Treibstrahlreaktors und die Konzentration des Phenols im Lösungsmittel in der ersten Zone so eingestellt werden, daß mehr als 95 Gewichtsprozent des in der ersten Zone befindlichen Reaktionsgemischs aus Oligomeren oder höher kondensierten Produkten bestehen.

Bevorzugt ist die Sauerstoffkonzentration in der flüssigen Phase des Treibstrahlreaktors wenigstens 70 Gewichtsprozent der Sättigungskonzentration, die mittlere Verweilzeit des Reaktionsgemischs in der ersten Zone zwischen 10 und 60 Minuten und die Konzentration des Phenols im Lösungsmittel in der ersten Zone 5 bis 50 Gew.%.

Verfahren zur kontinuierlichen Herstellung von Polyphenylenethern

Die Erfindung betrifft ein Verfahren zur kontinuierlichen Herstellung von hochmolekularen Polyphenylenethern aus einwertigen Phenolen durch oxidative Kupplungsreaktion in zumindest zwei in Reihe angeordneten Polymerisationszonen, wobei die erste Zone durch einen Rührkesselreaktor und zusätzlich einen innerhalb eines Reaktorkreislaufsystems angeordneten Treibstrahlreaktor, und die weitere(n) Zone(n) jeweils durch einen üblichen Reaktor gebildet sind, durch Einleiten von Sauerstoff und Ableiten des resultierenden Abgases bei Temperaturen zwischen 10 und 50°C und Drücken zwischen 1 und 10 bar in Anwesenheit eines Katalysatorkomplexes und eines Lösungsmittels.

Hochmolekulare Polyphenylenether und Verfahren zu ihrer Herstellung sind aus dem Stand der Technik bekannt und in zahlreichen Veröffentlichungen beschrieben. Nach den US-Patentschriften 3 306 874 und 3 306 875 z.B. wird die Polymerisation durch oxidative Kupplung einwertiger Phenole in einem oder mehreren Rührkesselreaktoren, die mit Kühlschlangen und Mantelkühlung sowie mit einem Gaseinleitungsrohr versehen sind, unter Vorlage des Katalysatorkomplexes und/oder der Phenole durchgeführt. Der Sauerstoff wird in konstanter Menge pro Zeiteinheit zudosiert.

Weiterhin ist in der EP-A1-107 653 ein Verfahren beschrieben, bei dem monomere Phenole zusammen mit dem Lösungsmittel einem sogenannten Begasungsrührreaktor, in dem ein Katalysatorkomplex vorgelegt ist, mit konstanter Sauerstoffzufuhr über einen bestimmten Zeitraum unter konstanter Geschwindigkeit mit dem Ziel zudosiert werden, das Molekulargewicht der Polyphenylenether gezielt einzustellen bzw. die Nebenproduktbildung den alkylsubstituierten 4,4'-Diphenochinonen zu reduzieren.

In dem US-Patent 3 405 092 wird ein kontinuierliches Mehrstufenverfahren beschrieben, bei dem die Polymerisation in zumindest zwei Blasensäulenreaktoren durchgeführt wird. Ein weiteres kontinuierliches Mehrstufenverfahren wird in dem US-Patent 4 477 649 vorgeschlagen. Hier besteht die erste Stufe aus einem Begasungsrührreaktor und die zweite Stufe aus einem sogenannten Vielzonenreaktor. Durch Verwendung eines Vielzonenreaktors wird eine Rückvermischung des Polymerisates weitgehend vermieden und ein Produkt mit enger Molgewichtsverteilung erhalten.

Nachteilig bei allen genannten Verfahren ist die dort praktizierte Sauerstoffdosierung. Um die Emission so niedrig wie möglich zu halten, ist es erforderlich, den Inertgasanteil im Abgas niedrig zu halten. Dabei lassen sich explosive Gasgemische nur dann zuverlässig vermeiden, wenn der Gasgehalt in der Flüssigphase gering ist, was zwangsläufig zu einer geringen Raum-Zeit-Ausbeute führt. Wird dagegen die Raum-Zeit-Ausbeute durch einen entsprechend hohen Sauerstoffgehalt erhöht, erhält man durch die zur Vermeidung einer explosiblen Gasatmosphäre notwendige Inertgasverdünnung hohe Emissionswerte und damit Verluste an flüchtigen Bestandteilen des Reaktionsgemisches. Ein konstanter Gaseintrag bzw. eine nicht an der Reaktion und Nebenproduktbildung orientierte kontrollierte Sauerstoffzufuhr birgt zudem den Nachteil, daß die für die Gasdispergierung aufzubringende Dissipationsenergie nicht anforderungsgemäß, sondern im Überschuß eingebracht werden muß. Darüber hinaus arbeiten die genannten diskontinuierlichen bzw. Zulaufverfahren aufgrund mangelnder Ausnutzung vorhandener Anlagenkapazitäten unwirtschaftlich. Insbesondere die Kapazität des Wärmetauschers wird nur während der Oligomerisierungsphase vollständig ausgenutzt.

Diese Nachteile werden durch das in der deutschen Patentanmeldung P 34 42 117 [EP-A1..........] vorgeschlagene Verfahren im wesentlichen vermieden. Die Reaktion wird hierbei in einem Kreislaufsystem aus zwei Reaktoreinheiten mit variabler, an die Erfordernisse der Reaktion angepaßten Sauerstoffzufuhr, durchgeführt.

Ein weiterer Nachteil bisher bekannter Mehrstufenverfahren ist, darin zu sehen, daß gerade die Umsetzung des Monomeren zum Oligomeren in der ersten Reaktoreinheit unbefriedigend ist. Dies bewirkt, daß die aus der Literatur bekannte Umverteilungsreaktion mit noch vorhandenen Monomeren verstärkt stattfinden kann, was einerseits zu einem hohen Nebenproduktanteil führt und sich andererseits nachteilig auf die Molekulargewichtsverteilung auswirkt. Dieser Nachteil tritt insbesondere bei kontinuierlichen Verfahren auf, bei dem die erste Reaktionsstufe aus einem Reaktor mit Rückvermischung besteht. Wegen des besonderen Verweilzeitverhaltens dieser Reaktoren kann so Monomeres in die nachfolgenden Reaktoreinheiten gelangen, was den oben beschriebenen Nachteil verstärkt.

Aufgabe der vorliegenden Erfindung war es deshalb, ein kontinuierliches Verfahren zur Herstellung von Polyphenylenethern durch oxidative Kupplung von Phenolen mit Sauerstoff zu entwickeln, das bei möglichst hohem Umsatz zu Oligomeren in der ersten Reaktionsstufe, bei hohen Raum-Zeit-Ausbeuten, bei geringer Nebenproduktbildung, bei minimaler Emmission an Gas und flüchtigen Bestandteilen und unter Bildung von Polymeren mit möglichst einheitlicher Molekulargewichtsverteilung unter stationären Bedingungen sicher und wirtschaftlich durchgeführt werden kann.

Die Aufgabe wird durch die Maßnahmen nach den Patentansprüchen 1 bis 5 gelöst.

Unter hochmolekularen Polyphenylenethern im Sinne der Erfindung werden die durch oxidative Kupplung von 2,6-Dialkyl-und/oder 2,3,6-Trialkylphenolen zu einer Kette alkylsubstituierter, in para-Stellung durch Sauerstoffatome etherartig gebundene Benzolringe verstanden. Die Polymeren weisen zahlenmittlere Molekulargewichte von 10 000 bis 50 000, bevorzugt 20 000 bis 30 000, bestimmt nach der in "Macromolecular Syntheses" 1, (1978), Seite 83 beschriebenen Methode auf.

Die zur Herstellung der hochmolekularen Polyphenylenether verwendeten einwertigen Phenole, die in den beiden ortho-Stellungen, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-tertiär-butylphenol, 2-Methyl-6-propylphenol, 2,6-Dibutylphenol, 2,3,6-Trimethylphenol sowie Gemische dieser Phenole.

Bevorzugt wird das für die Polymerisation vorgesehene einwertige Phenol mit einem o-Kresol-und p-Kresolanteil von weniger als 0,1 Gew.% eingesetzt. Besonders bevorzugt wird ein einwertiges Phenol der oxidativen Kupplung unterzogen, das weniger als 0,05 Gew.% o-Kresol und weniger als 0,01 Gew.% p-Kresol enthält. Insbesondere bevorzugt ist ein Verfahren, bei dem Phenol, m-Kresol und mehrkernige Phenole zu weniger als 0,02 Gew.% in den Ausgangsstoffen enthalten sind.

Ein Verfahren zur kontinuierlichen Herstellung von Polyphenylenethern in zwei in Reihe angeordneten Polymerisationszonen, wobei die erste Zone durch ein Rührkesselreaktor und zusätzlich einen innerhalb eines Reaktorkreislaufsystems angeordneten Treibstrahlreaktors, und die weitere(n) Zone-(n) jeweils durch einen üblichen Reaktor, wie einen Rührkesselreaktor, gebildet sind, ist bereits in der deutschen Patentanmeldung P 34 42 117 [EP-A1-.........] vorgeschlagen worden. Die zur Verwendung kommenden Treibstrahl-und Rührkesselreaktoren sind an sich bekannt und z.B. beschrieben in den Litraturstellen "Ullmanns Encyklopädie der technischen Chemie", 4. Auflage, Band 3, Seiten 366 bis 375, Verlag Chemie GmbH, D-6940 Weinheim, 1973; "Chemie-Technik" 11, (1982), Seiten 1061 bis 1066 und "Chemie-Ingenieur-Technik" 42, - (1970), Seiten 472 bis 479, so daß auf die Arbeitsweise in diesen Reaktoren hier nicht mehr eingegangen werden muß.

Die Herstellung von Polyphenylenethern durch die sog. oxidative Kupplung ist so bekannt, daß hier auf Einzelheiten verzichtet werden kann. Bei der oxidativen Kupplung wird Sauerstoff, vorzugsweise Sauerstoff mit einem Reinheitsgrad von > 98 Gew.% in die Polymerisationszone, welche das Phenol, Lösungsmittel und den Katalysator enthält, eingeleitet und das resultierende Abgas an anderer Stelle aus dem Polymerisationssystem abgeführt. Die oxidative Kupplungsreaktion mit Sauerstoff soll bei Temperaturen zwischen 10 und 50 bevorzugt 20 und 30°C und bei Drücken zwischen 1 und 10, bevorzugt 1,1 und 4 bar absolut ausgeführt werden. Zur Durchführung des Verfahrens im einzelnen wird auf die Lehren der US-Patente 3 306 874, 3 306 875, 3 661 848, 3 219 625, 3 378 505, 3 405 092, 3 549 670, 4 477 649 und 4 408 040 verwiesen. Ein Verfahren zur kontinuierlichen Herstellung von Polyphenylenethern ist auch in der EP-A1-103 154 beschrieben.

Bei dem für die oxidative Kupplung verwendeten Katalysatorkomplex handelt es sich um eine Kombination aus einem oder mehreren Aminen, wie Dibutylamin, Diethylamin, N,N'-Di-tert.-butylethylendiamin, Picolin, Chinolin, Morpholin, Piperazin, Pyridinbasen, Dimethylbutylamin, Dimethylisopropanolamin, Triethanolamin, Triisopropylamin, Diisopropanolamin oder N-Butylimidazol mit einem Kupfersalz, wie Kupfer-I-bromid, Kupfer-I-chlorid, Kupfer-I-jodid, Kupfer-II-acetat, Kupfer-II-propionat, Kupfer-II-acetessigester, Kupfer-II-acetylacetonat, Kupfer-II-oxid, Kupfer-II-carbonat; Kupfer-I/II-halogenide können dabei auch in situ aus Kupfer-(I/II)oxid durch Umsetzung mit Halogenwasserstoff erzeugt werden. Dabei bilden sich gleichzeitig auch Hydrobromide der eingesetzten Amine, die ihrerseits als Phasentransferkatalysatoren wirken können.

Ein bevorzugter Bereich bei der Menge der eingesetzten Amine liegt üblicherweise bei 2,0 bis 25,0 Mol pro 100 Mol des Monomeren, die Konzentration der Amine kann aber in der Reaktionsmischung innerhalb weiter Grenzen variieren, zweckmäßig sind jedoch niedrige Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen an Lösungsmittel, bezogen auf das Monomere. Es soll als Lösungsmittel ein aromatischer $C_6$-bis $C_{10}$-Kohlenwasserstoff verwendet werden, der gegebenenfalls noch geringe Mengen eines $C_1$-bis $C_8$-Alkanols enthalten kann. Geeignete Kohlenwasserstoffe sind insbesondere Ethylbenzol, Xylol, Diethylbenzol oder deren Gemische, wobei vorzugsweise Ethylbenzol oder Toluol verwendet werden. Geeignete Alkanole sind z.B. Methanol, Ethanol und/oder Isopropanol. Die Lösungsmittel werden üblicherweise bevorzugt im Bereich von 1:1 bis 10:1 Gewichtsteile, bezogen auf das monomere Phenol, eingesetzt.

Darüber hinaus kann gemäß der US-Patentschrift 3 544 515 die Reaktionsmischung einen Aktivator wie ein Diarylguanidin, ein Diarylformamidin oder Alkalisalz enthalten.

Bei dem erfindungsgemäßen Polykondensationsverfahren erfolgt die kontinuierliche Umsetzung der einwertigen Phenole in der Weise, daß die Sauerstoffkonzentration in der flüssigen Phase des Treibstrahlreaktors und die Konzentration des Phenols im Lösungsmittel in der ersten Zone so eingestellt werden, daß mehr als 95, bevorzugt 99 Gewichtsprozent des in der ersten Zone befindlichen Reaktionsgemischs aus Oligomeren oder höher kondensierten Produkten bestehen.

Zur Erfüllung dieser Erfordernisse ist lediglich eine Überwachung des in der ersten Zone befindlichen Reaktionsgemischs hinsichtlich des Oligomerengehaltes und des Gehalts an hoher kondensierten Produkten erforderlich, wobei ein hoher Gehalt von mehr als 95 Gew.% selbstverständlich für den Fachmann durch eine relativ hohe Sauerstoffkonzentration in der flüssigen Phase des Treibstrahlreaktors und durch das Kreislaufprinzip mit begrenzter Rückvermischung in der ersten Zone erreicht werden kann. Ist der gemessene Gehalt an Oligomeren oder höher kondensierten Produkten des in der ersten Zone befindlichen Reaktionsgemisch daher kleiner als 95 Gew.%, so muß erfindungsgemäß die Sauerstoffkonzentration erhöht und/oder die Konzentration des Phenols im Lösungsmittel erhöht werden. Zur Messung des Restmonomerengehalts während der Polykondensation in der ersten Zone werden in Zyklen von ca. 5 Minuten Proben von ca. 1 ml in einer HPLC-Anlage auf den Phenolgehalt quantitativ analysiert.

Oligomere sind Verbindungen, die aus einer geringen Anzahl monomerer Moleküle bestehen. Unter dem Ausdruck Oligomere oder höher kondensierten Produkten werden daher in der Regel nicht voll zu hochmolekularen Polyphenylenethern auskondensierte Polymere verstanden.

Nach bevorzugter Verfahrensweise soll die Sauerstoffkonzentration in der flüssigen Phase des Treibstrahlreaktors wenigsten 70 Gew.% der Sättigungskonzentration erreichen, wobei unter Sättigungskonzentration die Gleichgewichtskonzentration beim Arbeitsdruck und bei der Arbeitstemperatur in der Polymerlösung mit einer Grenzviskosität von 0,4 dl/g, gemessen bei 25°C in Chloroform nach DIN 51 562, verstanden wird. Die Sauerstoffkonzentration kann während der Polykondensation mit handelsüblichen, nach dem Prizip der Clarkzelle oder Herschzelle arbeitenden Elektroden bestimmt werden (vgl. Michael Hitchman "Measurement of dissolved oxygen", Verlag John Wiley and Sons, 2. Auflage, 1978).

Nach einer weiteren bevorzugten Verfahrensweise ist die mittlere Verweilzeit des Reaktionsgemischs in der ersten Zone zwischen 10 und 60, insbesondere 20 und 45 Minuten. Die mittlere Verweilzeit kann, wie üblich, durch den kontinuierlichen Durchsatz der Reaktanden und des Lösungsmittels durch die Polymerisationszone eingestellt werden. Die mittlere Verweilzeit des Reaktionsgemisches in der ersten Zone, bestehend im wesentlichen aus Treibstrahl-und Rührkesselreaktor, ist diejenige Zeit, die das Reaktionsgemisch im Mittel in der betreffenden Zone verweilt. Sie ist definiert als das Verhältnis der in der betreffenden Zone befindlichen Reaktionsmenge zu der je Zeiteinheit in der Zone durchgesetzten Menge an Reaktionsgemisch.

Es ist weiterhin bevorzugt, die Konzentration des Phenols im Lösungsmittel in der ersten Zone auf 5 bis 50, insbesondere 10 bis 30 Gewichtsprozent, bezogen auf das Gewicht der Lösung, einzustellen. Hierzu wird der ersten Zone eine entsprechend konzentrierte Lösung des Phenols im Lösungsmittel zugeführt.

Besondere Bedeutung beim erfindungsgemäßen Verfahren hinsichtlich der Emission an Gasen und flüchtigen Bestandteilen kommt der Zusammensetzung des Abgases zu. Nach bevorzugter Verfahrensweise soll das Abgas durch Verdünnen mit Inertgas wie Stickstoff auf eine Sauerstoffkonzentration unterhalb der Explosionsgrenze gebracht werden. Dazu wird die Konzentration des Sauerstoffs im Abgas der Reaktionszonen mit handelsüblichen Meßsonden wie Hersch-oder Clarkzellen gemessen. Vor Erreichen der kritischen Sauerstoffkonzentration wird Stickstoff als Verdünnung in den Gasraum der Reaktionszonen zugegeben, bzw. die Sauerstoffzufuhr unter Berücksichtigung eines mindestens 95 %igen Umsatzes zum Oligomeren gedrosselt.

Im einzelnen wird bei dem erfindungsgemäßen Polymerisationsverfahren die Umsetzung der einwertigen Phenole kontinuierlich in zwei Reaktionszonen vorgenommen. Die erste Reaktionszone besteht aus einem in Reihe geschalteten Strahldüsenreaktor und einem Rührkesselreaktor. Zwischen diesen Reaktoren sind Wärmetauscher und ein Förderaggregat installiert. Die zweite Reaktionszone besteht aus einem üblichen Strömungsrohrreaktor oder einem Blasensäulenreaktor oder einem Vielzonenreaktor oder vorzugsweise aus einer Rührkesselkaskade. Zur oxidativen Kupplung wird dem Treibstrahlreaktor soviel Sauerstoff zugeführt, daß mehr als 95 Gew.%, bei dem besonders bevorzugten Verfahren mehr als 99 Gew.% des Monomeren in der ersten Reaktionszone zum Oligomeren umgesetzt werden.

Die oxidative Kupplung wird unter weitgehend isothermen und isobaren Bedingungen durchgeführt. Unter weitgehend isothermen Bedingungen soll verstanden werden, daß die Temperatur am Ausgang der Wärmetauscher der ersten Reaktionszone bzw. die in den Reaktoren der zweiten Reaktionszone lediglich in einem Bereich von 3°C - schwankt. Weitgehend isobare Bedingungen soll heißen, daß der Druck in der Gasphase der Reaktionszonen nur etwa um 0,2 bar schwankt. Die für eine isotherme Fahrweise eingesetzten Wärmetauscher in der ersten Reaktionszone sind so ausgelegt, daß eine Entmischung der Gas-Flüssigdispersion verhindert wird.

Das Förderaggregat in der ersten Reaktionszone hat die Aufgabe, eine für die Abführung der Reaktionswärme im Wärmetauscher der ersten Reaktionszone notwendige Fördermenge bereitzustellen, die für die Dispergierung der Gasphase in den Strahldüsenreaktor der ersten Reaktionszone erforderliche Dissipationsenergie einzutragen sowie einen, dem Zulaufstrom an Monomeren entsprechenden Teil des Reaktionsgutes aus der ersten Reaktionszone in die zweite Reaktionszone zu fördern. Dabei ist konstruktiv zu gewährleisten, daß bis zu 20 Vol.% Gasanteile in der Flüssigphase mitgefördert werden können. Das stündliche Umwälzvolumen liegt üblicherweise im Bereich des 5-bis 50-fachen, vorzugsweise im Bereich des 6-bis 20-fachen des Gesamtvolumens in der ersten Reaktionszone.

In Verbindung mit der Messung des Sauerstoffgehaltes im Abgas, läßt sich die Sauerstoffdosierung in der Weise regeln, daß während der Reaktion die Konzentration des gelösten Sauerstoffs nach dem Strahldüsenreaktor der ersten Reaktionszone größer als 60 Gew.% der Sättigungskonzentration beträgt. Diese Form der Sauerstoffdosierung mit hoher Sauerstoffkonzentration in der flüssigen Phase des Strahldüsenreaktors (mehr als 70 Gew.%) gewährleistet zudem, daß das zudosierte Monomere schon in der ersten Reaktionszone zu mehr als 95 Gew.%, bei der besonders bevorzugten Fahrweise zu mehr als 99 Gew.% zum Oligomeren reagiert, was bei kontinuierlicher Fahrweise Voraussetzung für ein einheitliches Produkt mit geringen Nebenproduktanteil ist.

Die Auftrennung des kontinuierlichen Prozesses in zwei apparativ prinzipiell verschiedene Reaktionszonen hat den Vorteil, daß die installierten Apparateteile der ersten Reaktionszone, die prinzipiell für hohen Sauerstoffbedarf, große Wärmeentwicklung, hohe Umwälzleistungen sowie die Erzeugung einer ausreichend großen Stoffaustauschfläche ausgelegt sind zu jedem Zeitpunkt optimal nutzbar sind. In der zweiten Reaktionszone, in der die Oligomeren zu Polymeren reagieren, sind Wärmetauscher, und Förderaggregate nicht unbedingt erforderlich. Es hat sich gezeigt, daß auf diese Weise eine erhebliche Steigerung der Raum-Zeit-Ausbeute sowie ein erhöhter Apparatewirkungsgrad erreichbar ist. Zudem lassen sich bei den teilweise empfindlichen apparativen Einrichtungen der ersten Reaktionszone Verkrustungen bzw. Verklebungen durch Produkt auch bei hohen Konzentrationen an Phenolen vermeiden. Schließlich gelangt das Produkt aus der kontinuierlichen Polymerisationsanlage in idealer Weise zu den nachfolgenden ebenfalls kontinuierlich betriebenen Verfahrensstufen wie Katalysatorabtrennung und Zweistufenentgasung. Dadurch können die Anlagenkapazitäten zur Zwischenlagerung minimiert werden.

Im wesentlichen gelangt der für den Aufbau der Polymeren in der zweiten Reaktionszone noch notwendige Sauerstoff in physikalisch gelöster Form aus der ersten Reaktionszone zusammen mit der Reaktionslösung in die zweite Reaktionszone. Bei Bedarf kann indes in die zweite Reaktionszone zusätzlich gasförmiger Sauerstoff eindosiert werden. Wegen des nur noch geringen Sauerstoffbedarfs in der zweiten Reaktionszone ist eine isotherme Fahrweise auch ohne Kühlkapazitäten gewährleitstet. Emissionen an Gasen und flüchtigen Bestandteilen werden weitgehend vermieden.

Die zweite Reaktionszone kann beim erfindungsgemäßen Verfahren aus einem üblichen Strömungsrohrreaktor, einem üblichen Blasensäulenreaktor, einem üblichen Vielzonenreaktor oder wegen seiner einfachen Bauart besonders geeignet einer üblichen Rührkesselkaskade bestehen. [vgl. "Ullmanns Encyklopädie der technischen Chemie", 4. Auflage, Band 3, Seiten 366 bis 375, "Chemie-Ingenieur-Technik", 52 (1980), Seiten 951 bis 965 oder "Dechema Monographien 68, Nr. 1264 bis 1292, Seiten 35 bis 73 und H. Gerstenburg "Blasensäulen-Reaktoren", VDI Berichte Nr. 349, (1979), Seiten 110 bis 118].

Nach der Erfindung wird ein überraschend niedriger Gehalt an Nebenprodukten wie 4,4'-Diphenochinonen von kleiner als 0,6 %, bezogen auf das eingesetzte Phenol erhalten.

Die Erfindung wird nachfolgend unter Hinweis auf die Zeichnungen anhand eines Ausführungsbeispiels näher erläutert.

Nach Figur sind in einem Kreislaufsystem ein Treibstrahlrohr (1), ein Wärmetauscher (2), ein Rührreaktor (3) und eine Kreiselpumpe (4) über Rohrleitungen miteinander verbunden. Im unteren Teil des Treibstrahlreaktors ist ein Impulsaustauschraum (5) angedeutet. Nach Inertisieren des Kreislaufsystems mit Stickstoff über die Zuleitung (6) wird das erforderliche Volumen des Reaktionsansatzes bei (7) so eingebracht, daß bis zu 90 % des nutzbaren Kreislaufvolumens gefüllt ist. Anschließend erfolgt die kontinuierliche Dosierung der zu polymerisierenden Phenolmenge über den Zulaufstutzen (7) derart, daß die mittlere Verweilzeit der Reaktionslösung in dem Kreislaufsystem zwischen 20 min und 30 min liegt.

Mit (8) ist eine Einrichtung für die Zufuhr von Sauerstoff in den Strahldüsenreaktor (1) bezeichnet. Die Konzentration des gelösten Sauerstoffs ist bei (9) und (10) messbar. Die Messeinrichtung (11) erfaßt den Sauerstoffgehalt in der Abgasleitung (12).

Ein der Zulaufmenge entsprechender Teilstrom wird über eine Rohrleitung (13) in den ersten Kessel (14) der zweiten Reaktionszone gefördert. Dieser enthält eine Einrichtung (15) für die Zufuhr von Sauerstoff sowie Rohrleitungen (16) für die Zufuhr von Stickstoff, (17) für die Ableitung des Abgases, (18) für die Dosierung von Lösungsmittel über eine Strahldüse und (19) für den Überlauf in die folgende, bis auf die Lösungsmittelzufuhr identisch aufgebaute Reaktoreinheit. An die Abgasleitung (17) ist eine Messeinrichtung (11) angeschlossen. Eine weitere Messeinrichtung (20) zur Bestimmung des in der Reaktionslösung gelösten Sauerstoffs ist mit dem Rührreaktor (14) verbunden.

Beispiel 1

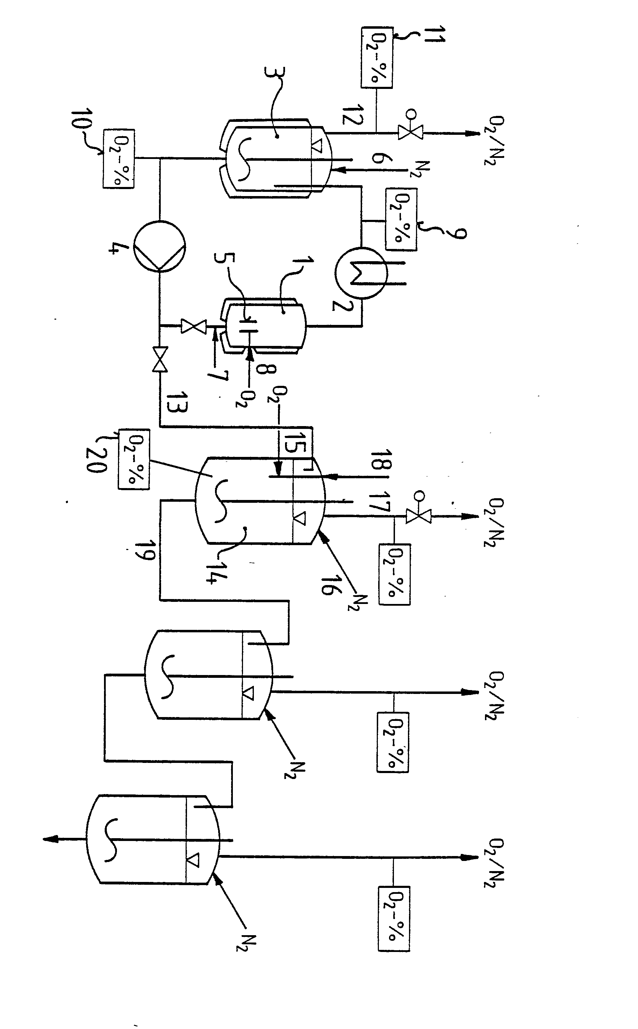

In dem in der Figur dargestellten Kreislaufsystem wird folgende Mischung vorgelegt:

| | | |
|---:|---|---|
| 55,66 | Mol | Toluol |
| 8,00 | Mol | 2,6-Dimethylphenol |
| 0,087 | Mol | Kupfer-I-bromid |
| 1,596 | Mol | Di-n-butylamin. |

In diese, mit einem Durchsatz von 133,5 l/h umgewälzte, über den Rührreaktor mit 80 l/h inertisierte und auf 25°C temperierte Lösung, wird zunächst 20 min mit Sauerstoff anpolymerisiert und danach 13,5 l/h einer aus oben angegebenen Verhältnis bestehende Ansatzlösung kontinuierlich in den Treibstrahlreaktor gefördert und mit reinem Sauerstoff in der Weise begast, daß im Strahldüsenreaktor der flüssig gelöste Sauerstoff mehr als 70 % des Sättigungswertes erreicht und gleichzeitig der Abgasgehalt an Sauerstoff bei minimalen Stickstoffstrom kleiner als 4 % ist. Vor dem Strahldüsenreaktor werden 13,5 l/h Oligomerlösung in den ersten Kessel der zweiten Reaktionsstufe gefördert und mit 30 l/h Sauerstoff weiterbegast. Die gleiche Menge geht in gleicher Weise in den zweiten bzw. in den dritten Kessel der zweiten Reaktionszone. Nach Einstellung stationärer Verhältnisse wurden am Ausgang des letzten Kessels der zweiten Reaktionszone ein Produkt mit einer Grenzviskosität von 0,72 dl/g nach einer Gesamtverweilzeit von 140 min erhalten. Der Nebenproduktanteil lag dabei bei 0,55 %, bezogen auf das eingesetzte Phenol.

**Ansprüche**

1. Verfahren zur kontinuierlichen Herstellung von hochmolekularen Polyphenylenethern aus einwertigen Phenolen durch oxidative Kupplungsreaktion in zumindest zwei in Reihe angeordneten Polymerisationszonen, wobei die erste Zone durch einen Rührkesselreaktor und zusätzlich einem innerhalb eines Reaktorkreislaufsystems angeordneten Treibstrahlreaktor, und die weitere(n) Zone(n) jeweils durch einen üblichen Reaktor gebildet sind, durch Einleiten von Sauerstoff und Ableiten des resultierenden Abgases bei Temperaturen zwischen 10 und 50°C und Drücken zwischen 1 und 10 bar in Anwesenheit eines Katalysatorkomplexes und eines Lösungsmittels, dadurch gekennzeichnet, daß die Sauerstoffkonzentration in der flüssigen Phase des Treibstrahlreaktors, und die Konzentration des Phenols im Lösungsmittel in der ersten Zone so eingestellt werden, daß mehr als 95 Gewichtsprozent des in der ersten Zone befindlichen Reaktionsgemischs aus Oligomeren oder höher kondensierten Produkten bestehen.

2. Verfahren nach Anspruch 1, dadurch gekennzeichnet , daß die Sauerstoffkonzentration in der flüssigen Phase des Treibstrahlreaktors wenigstens 70 Gewichtsprozent der Sättigungskonzentration erreicht.

3. Verfahren nach Anspruch 1, dadurch gekennzeichnet, daß die Konzentration des Phenols im Lösungsmittel in der ersten Zone 5 bis 50 Gew.% beträgt.

4. Verfahren nach Anspruch 1, dadurch gekennzeichnet, daß die mittlere Verweilzeit des Reaktionsgemischs in der ersten Zone zwischen 10 und 60 Minuten liegt.

5. Verfahren nach Ansprüchen 1 bis 4, dadurch gekennzeichnet, daß das Abgas durch Verdünnen mit Inertgas auf eine Sauerstoffkonzentration unterhalb der unteren Explosionsgrenze gebracht wird.